# EUROPÄISCHE PATENTANMELDUNG

(11) **EP 1 134 639 A2**
(43) Veröffentlichungstag der Anmeldung: **19.09.2001**
(21) Anmeldenummer: 01106094.4
(22) Anmeldetag: 13.03.2001
(51) Int. Cl.: G05B 23/02

(54) **Verfahren zur Auslegen von Flugregeln**

(30) Priorität: 15.03.2000 DE 10012517
(71) Anmelder: EADS Deutschland GmbH, 81663 München (DE)
(72) Erfinder: Becker, Jürgen, Dr., 81479 München (DE)

(57) **Zusammenfassung**

Verfahren zur Auslegung von Flugreglern bei dem zunächst für das starre Flugzeug und anschließend für das elastische Flugzeug die Dämpfung und der Phasenverzug für jede Anregungsfrequenz ermittelt wird, und der Flugregler so angepaßt wird, daß die Strukturantworten für jede Anregungsfrequenz sowohl für das das starre Flugzeug als auch für das elastische Flugzeug im offenen Regelkreis außerhalb zweier für das elastische Flugzeug geltenden Auslegungsfelder (51,52) jeweils um die Instabilitätspunkte in dem Dämpfungs-Phasenverzug-Datenfeld gelegen sind, wobei für die Auslegung des elastischen Flugzeugs zwischen den Phasenverzügen von - 270 Grad und - 495 Grad eine Dämpfung über - 6 dB hinaus zugelassen wird.

## Beschreibung

Die Erfindung betrifft ein Verfahren zur Auslegung von Flugregiern

Bei modernen geregelten Flugzeugen besteht insbesondere bei Verwendung immer weicherer Flugzeug-Strukturen die Anforderung, die dadurch verstärkt auftretenden Strukturschwingungen zu kompensieren.

Aus der Patentanmeldung DE 198 41 632.6 ist ein Verfahren zum Kompensieren von Strukturschwingungen eines Flugzeugs aufgrund von Böen und Buffeting bekannt, bei dem eine meßtechnische Erfassung der Strukturschwingungen mittels in einer Trägheitsensorik ermittelten Drehraten, ein Zuführen der erfassenden Drehraten an das Flugregelsystem sowie ein Erzeugen von phasen- und amplitudengerechten Steuerklappen-Bewegungen bekannt, um die Phasen und Amplituden der angeregten Schwingungen zu minimieren. Die Auslegung von Flugregelsystemen ist aus den militärischen Vorschriften MIL-A-8868B für elastische Flugzeug und aus der MIL-F-8785B für das starre Flugzeug bekannt, in denen im Offenkreis-Diagramm von Phasenverzug und Dämpfung generell einen Amplitudenrand von 6 DB und unabhängig davon einen Phasenrand von mindestens +/- 45 Grad vorgesehen ist.

Es ist die Aufgabe der Erfindung, ein insbesondere für weiche Flugzeug-Strukturen geeignetes Verfahren zur Auslegung des Flugreglers zu schaffen.

Diese Aufgabe wird mit den Merkmalen des Patentanspruchs 1 gelöst. Eine weitere Ausführungsform sind in dem Unteranspruch angegeben.

Im folgenden wird die Erfindung anhand der beiliegenden Figuren beschrieben, die zeigen:
- Fig. 1 ein Blockschaltbild zur schematischen Darstellung der funktionalen Einbettung eines Flugzeugs-Reglers,
- Fig. 2 ein Offenkreis-Diagramm für ein Flugzeugmodell, bei dem die elastischen Schwingungen berücksichtigt werden, zur Beschreibung der erfindungsgemäßen Auslegungskriterien.

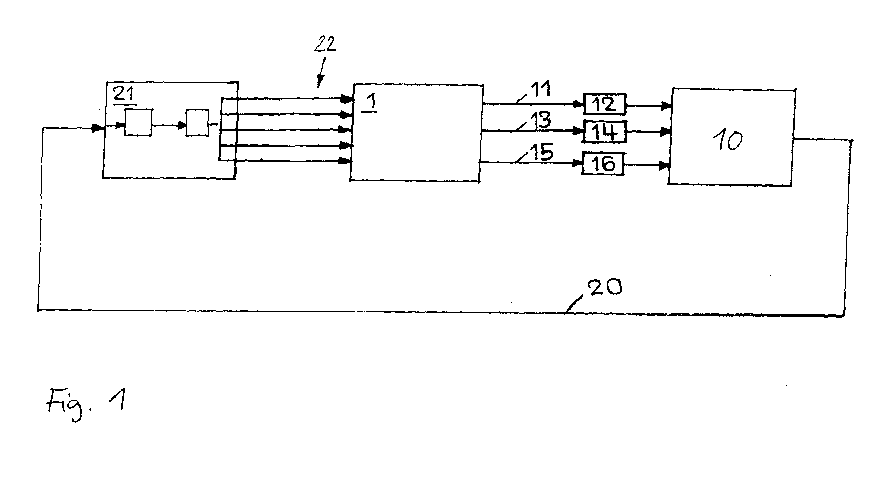

Die Figur 1 zeigt ein elektronisches Flugregelsystem 1, das über zumindest eine Datenverbindung 11 mit einem oder mehreren Stellantrieben 12 für die Höhenruder, mit einer Datenverbindung 13 mit den Stellantrieben 14 für die Querruder und mit einer Datenverbindung 15 mit Seitenruder-Stellantrieben 16 verbunden ist. Die Auswirkungen aus der Stellflächen aus dem Flugzeugverhalten wird symbolisch mit dem Funktionsblock 10 dargestellt. Das Flugzeugverhalten 10 wird mittels einer dem Flugregelsystem zugeordneten Trägheitsensorik 21 erfaßt, was symbolisch mit der Verbindungslinie 20 dargestellt ist. Die Trägheitssensorik 21 ist wiederum über analoge Signalleitungen 22 mit dem Flugregelsystem 1 verbunden. Zur Dämpfung von Strukturschwingungen aufgrund von Böhen und Buffeting werden die im Inertialsystem 21 erfassten Drehraten verwendet.

Im Flugregler werden einzelne Kerbfilter oder Strukturfilter, Phasevorhaltfilter und Reglungsverstärkungen verwendet, um die jenigen elastischen Formen, die nicht für die Schwingungsdämpfung in Betracht kommen, auszudämpfen. Es können auch sogenannte inverse Kerbfilter vorgesehen sein, die betreffende elastische Formen verstärken und mit denen die in einer Auslegung zu optimierende Phasenverschiebung zur stabilen Ausschaltung der elektrischen Signale über den inversen Kerbfilter zu erreichen. Die Phasevorhaltfilter, die ihnen dabei dazu, die von den Kerbfiltern erzeugten niederfrequenten Phasenverluste rückgängig zu machen, damit die erfindungsgemäßen Stabilitätskriterien für die Dynamik der Starren und des geregelten Flugzeugs eingehalten werden können.

Die genannten Regler-Komponenten werden nach dem Fachwissen eines Reglerfachmanns derart eingesetzt, daß die im folgenden beschriebenen Auslegungskriterien für den Flugregler eingehalten werden.

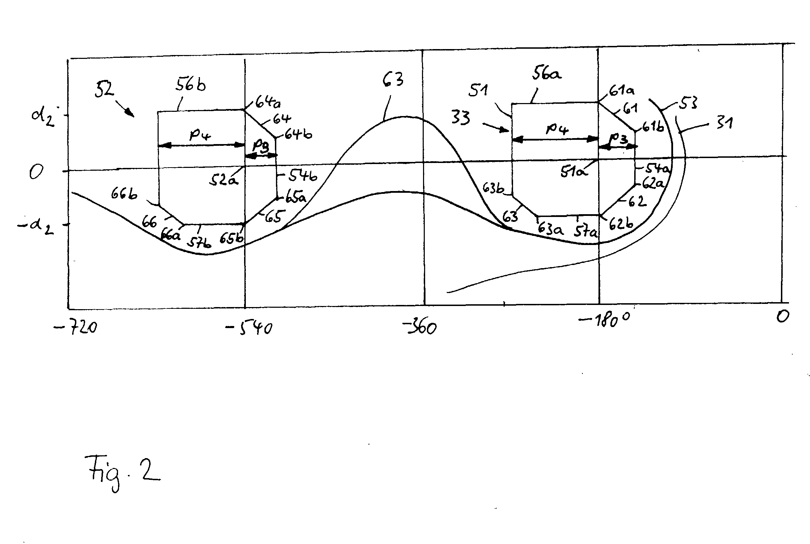

Figur 2 beschreibt die erfindungsgemäßen Offen-Kreis-Auslegungskriterien für den Flugregler bei Zugrundelegung des starren Flugzeugs, d.h. des Flugzeugs einschließlich Regler ohne Betrachtung der elastischen Schwingungsformen, sowie des elastischen Flugzeugs, d.h. des Flugzeugs einschließlich Regler mit Betrachtung der elastischen Schwingungsformen. Im Diagramm ist auf der Abszisse der Phasenverzug und auf der Ordinate die Verstärkung in dB aufgetragen. Die Kurve 31 des starren Flugzeugs zeigt dabei den Phasenverzug und die Dämpfung des starren Flugzeugs mit Regler für steigende Anregungs-Frequenzen. Diese Kurve oder das Antwort-Verhalten des starren Flugzeugs 31 wird in der Simulation anhand eines starren Flugzeugmodells ermittelt. Mit einem bereichsweisen für das starre Flugzeug geltenden Auslegungsfeld 51 oder Offen-Kreis-Kriterium 33 ist ein bereichsweises Kriterium in Abhängigkeit von Dämpfung und Phasenverzug definiert, der erfindungsgemäß angibt, welches Wertepaar aus Dämpfung und Phasenverzug für das starre Flugzeugmodell mit Regler nicht auftreten darf. Dieses Feld ist um einen Bezugspunkt oder Instabilitätspunkt 51a herum gebildet, der durch das Wertepaar mit dem Phasenverzug -180° und der Verstärkung 0 dB definiert ist.

Bezüglich des Verhalten des elastischen Flugzeugs mit Regler und den genannten Filtern ist erfindungsgemäß neben dem Auslegungsfeld 51 noch einweiteres Auslegungsfeld 52 vorgesehen. Die Auslegungsfelder oder Kriterien-Bereiche 51, 52, sind bereichsweise für das starre Flugzeug geltende Offen-Kreis-Kriterien, in Abhängigkeit von Dämpfung und Phasenverzug in einem Phasendiagramm definiert. Dabei darf die Kurve 53 des Antwortverhaltens des elastischen Flugzeugs mit Regler die Felder 51, 52 nicht berühren oder durchfahren.

Die Felder 51, 52 sind allgemein - d.h. bezüglich ihrer minimalen Grenzen - so gestaltet, daß deren minimale Grenzen paraboloide geschlossene und bezüglich der Dämpfungs-Nullinie symmetrische Kurven darstellen, die vom jeweiligen Instabilitätspunkt ausgehen, d.h. vom Instabilitätspunkt 51a mit dem Phasenverzug -180° und der Dämpfung 0 bzw. um den Instabilitätspunkt 52a mit dem Phasenverzug -45° und der Dämpfung 0. Die Grenzen der Felder 51, 52 sind definiert durch eine einheitliche Krümmungsrichtung entlang der Umfangslinien derselben sowie durch die Eckpunkte - 90 Grad und + 45 Grad in Bezug auf den Phasenverzug und +/- 4 dB in Bezug auf die Dämpfung. Die Felder sind vorzugsweise in Form eines Poygons gebildet, um sämtliche Grenzen derselben an jedem Punkt eindeutig definiert zu haben. Es handelt sich erfindungsgemäß also und ein Verfahren zur Auslegung von Flugreglern bei dem zunächst für das starre Flugzeug und anschließend für das elastische Flugzeug die Dämpfung und der Phasenverzug für jede Anregungsfrequenz ermittelt wird, und der Flugregler so angepaßt wird, daß die Strukturantworten für jede Anregungsfrequenz außerhalb der sowohl für das starre Flugzeug als auch für das elastische Flugzeug geltenden Auslegungsfelder (51,52) jeweils um die Instabilitätspunkte in dem Dämpfungs-Phasenverzug-Datenfeld gelegen sind, wobei für die Auslegung des geregelten Flugzeugs zwischen den Phasenverzügen von - 270 Grad und - 495 Grad Dämpfungswerte über -6 dB hinaus zugelassen werden. Die Kurve 53 kann also zwischen denFeldern 51, 52 eine Erhöhung, wie an Hand des Abschnitts 63 in der Fig. 2 gezeigt, aufweisen.

In der vorzugsweisen Gestaltung der Felder als Polygone 51, 52 bildet sich das erste Auslegungs-Feld 51 um den Instabilitätspunkt 51a mit dem Phasenverzug -180° und der Dämpfung 0, während sich das zweite Auslegungsfeld um den Instabilitätspunkt 52a mit dem Phasenverzug -540° und der Verstärkung 0 herum bildet. Beide Auslegungsfelder 51, 52 bilden sich um den jeweiligen Instabilitätspunkt herum zum einem mit einer konstanten oberen Phasengrenze 54a bzw. 54b, die jeweils um einen Phasenabstand p3 von dem jeweiligen Instabilitätspunkt 51a bzw. 52a entfernt liegt. Der Phasenabstand p3 beträgt minimal + 30°, so daß die obere Phasengrenze 54a, 54b bei -150° bzw. -510° Phasenverzug liegt. Vorzugsweise beträgt p3 45 Grad und ist maximal 60 Grad. Weiterhin werden die Auslegungsfelder 51, 52 durch eine untere Phasengrenze begrenzt, die vom jeweiligen Instabilitätspunkt 51a, 52a aus um einen Phasenabstand p4 in negativer Richtung entfernt liegt. Der Wert p4 beträgt vorzugsweise 90°, so daß die unteren Phasengrenzen im Phasendiagramm bei dem Phasenverzug -270° bzw. -630° liegen. Der Wert p4 ist minimal 60 Grad und maximal 120 Grad. Der geeignete Wert für p3 und p4 hängt vom Anwendungsfall, d.h. vom auszulegenden Flugzeug und der Weichheit seiner Struktur ab.

Die Auslegungsfelder 51 und 52 werden weiterhin in Bezug auf die Dämpfungen durch horizontale Grenzen in dem Offenkreisdiagramm begrenzt. Dabei wird erfindungsgemäß als obere Dämpfungsgrenze 56a bzw. 56b eine Dämpfung d2 und als untere Dämpfungsgrenze 57a bzw. 57b -d2 vorgegeben. Der Wert von d2 beträgt vorzugsweise 6dB und beträgt minimal 4 dB. Die Dämpfungsgrenzen können je nach Anwendungsfall schwanken.

Die Auslegungsfelder 51, 52 sind an ihren Ecken z.B. mit 45° Schrägen verringert, um zu verhindern, daß die Randbereiche unverhältnismäßig weit von den Instabilitätspunkten 51a, 52a entfernt liegen würden und daß eine Auslegungslinie 53 unnötig weit von den Instabilitätspunkten entfernt liegen müßte.

Das Auslegungsfeld 51 weist demgemäß für die vorzugsweise angegebenen Werte für p3, p4, und d2 eine erste Anschrägung 61 mit dem durch das Wertepaar (+d2 dB, -180°) definierten Eckpunkt 61a und dem durch das Wertepaar (+0.5.d2 dB, -180°+p3) definierten Eckpunkt 61b auf. Weiterhin weist das Auslegungsfeld 51 eine zweite Anschrägung 62 mit dem durch das Wertepaar -(0.5-d2 dB, -180°+p3) definierten Eckpunkt 62a und dem durch das Wertepaar (-d2 dB, -180°) definierten Eckpunkt 62b auf. Eine dritte Anschrägung 63 weist einen mit dem durch das Wertepaar (-d2 dB, -180°-0.75·p4) definierten Eckpunkt 63a und einen mit dem durch das Wertepaar (+0.5·d2 dB,-180°-p4) definierten Eckpunkt 63b auf. Die Anschrägungen 61, 62, 63 können auch durch Kurven gebildet sein.

In entsprechender Weise weist das Auslegungsfeld 52 an Randbereichen Verringerungen auf, die vorzugsweise als Anschrägungen 64, 65, 66 ausgebildet sind. Dabei sind die Auslegungsfelder an ihren Rändern zumindest ab der Dämpfung von (+/- 2/3·d1) um 45 Grad abgeschrägt. Im einzelnen ist eine erste Anschrägung 64 mit dem durch das Wertepaar (+d2 dB, -540°) definierten Eckpunkt 64a und dem durch das Wertepaar (+0.5·d2 dB, -540°+p3) definierten Eckpunkt 64b vorgesehen. Weiterhin weist das Auslegungsfeld 52 eine zweite Anschrägung 65 mit dem durch das Wertepaar -(0.5·d2 dB, -540°+p3) definierten Eckpunkt 65a und dem durch das Wertepaar (-d2 dB, -540°) definierten Eckpunkt 65b auf. Eine dritte Anschrägung 66weist einen mit dem durch das Wertepaar (-d2 dB, -540°- 0.75·p4) definierten Eckpunkt 65a und einen mit dem durch das Wertepaar (+0.5·d2 dB, -540°-p4) definierten Eckpunkt 65b auf. Die Anschrägungen 64, 65, 66 können auch durch Kurven gebildet sein.

Die dynamische Auslegung des Reglers für das elastische Flugzeug erfolgt nun derart, daß die Auslegungslinie 53 für alle auftretenden Erregungsfrequenzen die Auslegungsfelder 51, 52 nicht berührt oder durchquert. Zwischen der Auslegungsfelder 51, 52 kann die Auslegungskurve 53 dabei auch eine Erhöhung 63 aufweisen, solange diese nicht die Auslegungsfelder 51,52 berührt oder durchfährt. Die Auslegungskurve 63 kann natürlich nur so gestaltet sein, daß die dynamischen Lasten einer Steuerflächen sowie einen Anschlußstellen nicht überschritten wird. Anzustreben ist jedoch, daß sich die Auslegungskurve 53, 63 möglichst weit nach oben, d.h. zu möglichst großen Verstärkungen bewegt, da dann eine größere Abminderung, d.h. Vibrationsdämpfung erfolgt.

Durch dieses Zulassen von Amplituden - und Phasen-Zuständen bereichsweise über eine Dämpfung von 6 dB hinaus werden die dynamischen Auslegungsforderungen wesentlich reduziert, so daß wesentlich geringere Maßnahmen bezüglich der Struktur oder der Flugzeugsysteme im Vergleich zu Auslegungsverfahren nach dem Stand der Technik erforderlich werden.

Die Kerbfilter, Phasevorhaltfilter und Reglungsverstärkungen sowie die inversen Kerbfilter werden nach Verfahren nach dem Stand der Technik so angepaßt, daß die Auslegungskurven 31 bzw. 53, 63 nicht in die zugehörigen Auslegungsfelder 33 bzw. 51, 52 hineinfahren oder diese berühren. Die Kerbfilter und die inversen Kerbfilter werden dementsprechend einzeln als Zähler- und Nennerpolynome im analogen Frequenzbereich aufgestellt. Zum Einbau in den Flugrechner werden sie in eine abgeänderte Form gebracht. Das einzelne Frequenzverhalten wird so im gesamten Offenkreissignal am Schnittpunkt optimiert, so daß die Stabilitätskriterien gewährleistet sind.

## Patentansprüche

1. Verfahren zur Auslegung von Flugreglern bei dem zunächst für das starre Flugzeug und anschließend für das elastische Flugzeug die Dämpfung und der Phasenverzug für jede Anregungsfrequenz ermittelt wird, und der Flugregler so angepaßt wird, daß die Strukturantworten für jede Anregungsfrequenz sowohl für das das starre Flugzeug als auch für das elastische Flugzeug im offenen Regelkreis außerhalb zweier für das elastische Flugzeug geltenden Auslegungsfelder (51,52) jeweils um die Instabilitätspunkte in dem Dämpfungs-Phasenverzug-Datenfeld gelegen sind, wobei für die Auslegung des elastischen Flugzeugs zwischen den Phasenverzügen von - 270 Grad und - 495 Grad eine Dämpfung über - 6 dB hinaus zugelassen wird.

2. Verfahren zur Auslegung von Flugreglern, nach dem Anspruch 1, **dadurch gekennzeichnet**,
daß die Auslegungskurve (53, 63) für das starre und elastische Flugzeug unterhalb oder seitlich eines ersten (51) und eines zweiten Auslegungfelds (52) aufgrund einer entsprechenden Anpassung des Flugreglers zu legen ist,
wobei das erste Auslegungsfeld (51) durch die Verstärkung und den Phasenverzug aufgrund einer Anregung des Flugzeugs bestimmten Datenpunkte gebildet ist: (+c, -270°), (+c, -180°), (+c/2, -135°), (-c/2, -135°), (-c, -180°), (-c, -240°), (-2/3 c, -270°),
wobei das zweite Auslegungsfeld (52) durch folgende Datenpaare festgelegt ist: (+c,-630°), (+c, -540°), (+c/2, -495°), (-c/2, -495°), (-c, -540°), (-c, -600°), (-2/3, -630°),
wobei die Auslegungsfelder an ihren Rändern zumindest ab der Dämpfung von (+/-2/3·d1) um 45 Grad abgeschrägt sind,
wobei der Wert c mindestens 4dB und der Wert d 1 mindestens 4 Dezibel beträgt.
